**Europäisches Patentamt**

**European Patent Office**

**Office européen des brevets**

(19)

(11) Veröffentlichungsnummer: **0 216 348**
**B1**

(12) # EUROPÄISCHE PATENTSCHRIFT

(45) Veröffentlichungstag der Patentschrift:
**29.11.89**

(51) Int. Cl.⁴: **H05B 33/08**

(21) Anmeldenummer: **86113051.6**

(22) Anmeldetag: **22.09.86**

(54) Schaltungsanordnung zum Betreiben von Leuchtdioden bei hoher Packungsdichte.

(30) Priorität: **27.09.85 DE 3534582**

(43) Veröffentlichungstag der Anmeldung:
**01.04.87 Patentblatt 87/14**

(45) Bekanntmachung des Hinweises auf die Patenterteilung:
**29.11.89 Patentblatt 89/48**

(84) Benannte Vertragsstaaten:
**AT CH DE FR IT LI NL**

(56) Entgegenhaltungen:
FR-A- 2 255 774
US-A- 3 521 123

(73) Patentinhaber: **Siemens Aktiengesellschaft,
Wittelsbacherplatz 2, D-8000 München 2(DE)**

(72) Erfinder: **Pönisch, Heinz, Hirtenweg 6,
D-7500 Karlsruhe 1(DE)**

## Beschreibung

Die Erfindung bezieht sich auf eine Schaltungsanordnung zum Betreiben von Leuchtdioden bei hoher Packungsdichte an einer Versorgunsspannung zwischen 15 bis 30 V. Eine solche Schaltungsanordnung ist bekannt aus der FR-A 2 255 774.

Leuchtdioden zu Anzeigezwecken werden - wie bekannt - an einem Vorwiderstand betrieben, an dem bei einer Versorgungsspannung von beispielsweise 28 V über 80 % der Gesamtleistung abfallen und in Wärme umgesetzt werden. Beim Einsatz einer Vielzahl derartig beschalteter Leuchtdioden in Kompaktbaugruppen, Moduln oder in Bausteinen sogenannter Kopaktwarten wird eine hohe Packungsdichte erreicht, so daß es zu einem erheblichen Wärmestau kommen kann, der wiederum zum Ausfall von Halbleiterbauelementen, zur Verformung thermoplastischer Teile oder Erwärmung der Frontplatten der Bausteine auf Temperaturen über 100 °C führt.

Es besteht somit die Aufgabe, derartige Leuchtdioden bei hoher Packungsdichte verlustarm zu betreiben, so daß die angesprochenen Probleme des Wärmestaus nicht auftreten.

Eine Lösung der Aufgabe wird mit einer Schaltungsanordnung gemäß Anspruch 1 gegeben.

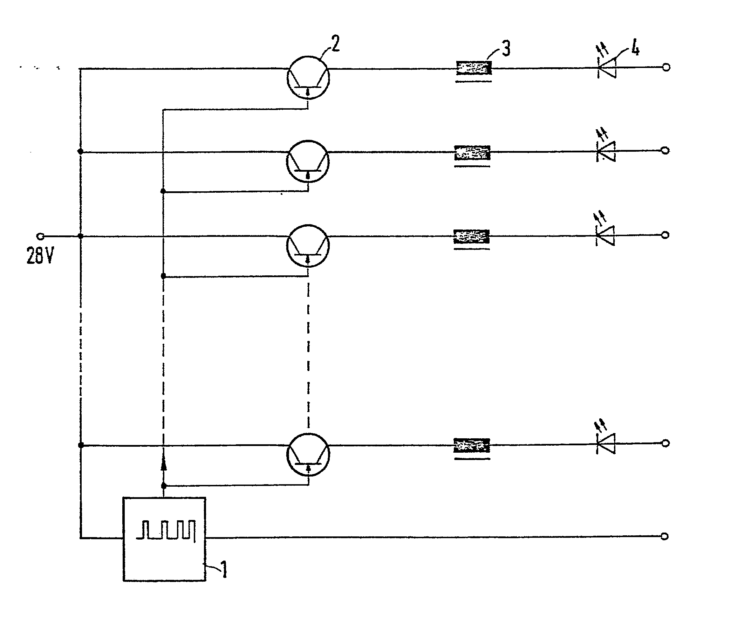

Zur Erläuterung der Erfindung ist in der Figur ein Schaltungsbeispiel schematisch dargestellt und im folgenden beschrieben.

In einem Impulsgeber 1 wird eine Impulsfolge mit einem Impuls-/Pausenverhältnis von etwa 1 : 4 bei einer Impulsfolgefrequenz von ca. 35 kHz erzeugt. Der Impulsgeber 1 steuert Halbleiterschalter 2, die bevorzugt als Darlington-Treiberstufe ausgelegt sind und an deren Eingängen die Versorgungsspannung von 28 V liegt und deren Ausgänge jeweils mit einer Reihenschaltung einer Induktivität 3 und der Leuchtdiode 4 verbunden sind. Die Induktivität 3 ist als Miniaturdrossel mit einer Induktivität von 3,3 mH ausgebildet. Sie weist etwa ein Viertel der Oberfläche eines entsprechenden ohm'schen Vorwiderstandes für die Leuchtdiode auf und erwärmt sich nur auf maximal 40 °C.

Auf diese Weise ist es möglich, in einem Baustein eine größere Anzahl von Leuchtdioden zu betreiben, ohne daß eine störende Erwärmung auftritt.

## Patentansprüche

1. Schaltungsanordnung zum Betreiben von Leuchtdioden bei hoher Packungsdichte an einer Versorgungsspannung zwischen 15 und 30 V, **gekennzeichnet durch**
- einen Impulsgeber (1) mit einem Impuls-/Pausenverhältnis zwischen 1 : 3 bis 1 : 5;
- einen Halbleiterschalter (2), an dessen Eingang die Versorgungsspannung und an dessen Ausgang eine Reihenschaltung einer Induktivität (3) mit der Leuchtdiode (4) angeschlossen ist.

2. Schaltungsanordnung nach Anspruch 1, **dadurch gekennzeichnet**, daß der Impulsgeber (1) mit einer Frequenz zwischen 20 und 40 kHz betrieben wird.

3. Schaltungsanordnung nach Anspruch 1, **dadurch gekennzeichnet**, daß der Halbleiterschalter (2) Teil einer Darlington-Treiberschaltung ist.

4. Schaltungsanordnung nach Anspruch 1, **dadurch gekennzeichnet**, daß die Induktivität (3) eine Miniaturdrossel mit einer Induktivität von ca. 3 mH ist.

## Claims

1. Circuit arrangement for the operation of light diodes with high packing density at a supply voltage of between 15 and 30 V, characterised by
- a pulse generator (1) having a mark–to–space ratio of between 1 : 3 and 1 : 5;
- a semiconductor switch (2), to the input of which is connected the supply voltage, and to the output of which is connected a series circuit of an inductance (3) with the light diode (4).

2. Circuit arrangement according to claim 1, characterised in that the pulse generator (1) is operated at a frequency of between 20 and 40 kHz.

3. Circuit arrangement according to claim 1, characterised in that the semiconductor switch (2) is part of a Darlington driver circuit.

4. Circuit arrangement according to claim 1, characterised in that the inductance (3) is a miniature reactance with an inductance of ca. 3 mH.

## Revendications

1. Montage pour faire fonctionner des diodes à luminescence, dans le cas d'une densité élevée d'intégration, avec une tension d'alimentation comprise entre 15 et 30 V, caractérisé par
- un générateur d'impulsions (1), dans lequel le rapport impulsion/pause entre impulsions est compris entre 1 : 3 et 1 : 5;
- un interrupteur à semiconducteurs (2), à l'entrée duquel est appliquée la tension d'alimentation et à la sortie duquel est raccordé un circuit série formé d'une inductance (3) et de la diode à luminescence (4).

2. Montage suivant la revendication 1, caractérisé par le fait que le générateur d'impulsions (1) fonctionne à une fréquence comprise entre 1 à 40 kHz.

3. Montage suivant la revendication 1, caractérisé par le fait que l'interrupteur à semiconducteurs (2) fait partie d'un étage d'attaque de Darlington.

4. Montage suivant la revendication 1, caractérisé par le fait que l'inductance (3) est une bobine d'arrêt miniature possédant une inductance égale à environ 3 mH.